# EUROPEAN PATENT SPECIFICATION

(11) **EP 3 796 497 B1**
(45) Date of publication and mention of the grant of the patent: **19.07.2023**
(21) Application number: 20195462.5
(22) Date of filing: 10.09.2020
(51) Int. Cl.: H02G 15/04, H02G 3/06, H01R 13/52, H02G 15/013, H02G 15/076

(54) **COMMUNICATION MODULE AND INVERTER**
KOMMUNIKATIONSMODUL UND WECHSELRICHTER
MODULE DE COMMUNICATION ET ONDULEUR

(30) Priority: 18.09.2019 CN 201921560560 U
(43) Date of publication of application: 24.03.2021
(73) Proprietor: Sungrow Power Supply Co., Ltd., Hefei, Anhui 230088 (CN)
(72) Inventor: GAO, Xiang, Hefei, Anhui 230088 (CN); HU, Konghong, Hefei, Anhui 230088 (CN)
(74) Representative: Elzaburu S.L.P.

(56) References cited:
- CN-U- 206 236 878
- CN-U- 206 758 731
- US-A1- 2006 166 554
- US-B2- 10 116 083

## Description

### FIELD

The present disclosure relates to the technical field of communication wiring, and in particular, to a communication module and an inverter including the communication module.

### BACKGROUND

Photovoltaic power generation is more and more valued and popular due to its advantages of green, environmental protection, and renewable. In the photovoltaic power generation technology, an inverter that converts direct current (DC) power generated by a photovoltaic module into alternating current (AC) power is a key component for the photovoltaic power generation technology.

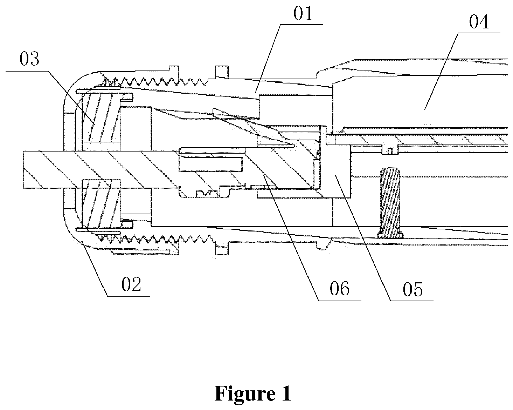

As shown in Figure 1, in conventional technology, a main structure of a communication module includes a housing 01, a rubber plug 03, a tightening cap 02, a network cable 06, a network cable port 05, and a printed circuit board (PCB) 04. The network cable 06 is inserted into the network cable port 05 inside the housing 01 through the tightening cap 02 and the rubber plug 03, and then the tightening cap 02 is tightened up. Clamping jaws of the housing 01 which are squeezed by the tightening cap 02 compress the rubber plug 03, so that the rubber plug 03 shrinks and seals an outlet positon of the network cable, thereby achieving waterproof effect.

The rubber plug 03 is squeezed inside the housing 01, which makes it difficult to remove the rubber plug. In a case that the rubber plug cannot be taken out, the network cable cannot be passed through an inner hole of the rubber plug, resulting in the network cable being difficult to be assembled. In addition, because the network cable port 05 extends deep into a body of the communication module, a location of the network cable port 05 is not visible from the outside. Further, since an internal space of the communication module is limited, a hand cannot be reached in for operation, resulting in the network cable 06 being difficult to be plugged and unplugged.

US20060166554 A1 discloses a waterproof device for an electrical connector includes a sleeve for containing a plug at front end thereof and having a resilient tightening section at another end thereof. A waterproof element is arranged in the resilient tightening section. A bolting cap is arranged on the outer end of the sleeve and tightens a peripheral of the waterproof element. Therefore, the waterproof element also tightens a cable of the plug. Therefore, the waterproof element wraps or caps one end of the cable and is compressed by the bolting cap to quickly assemble the waterproof device.

CN206758731 U discloses a M19 waterproof connector of RJ45 network, including the female end insulator of RJ45 panel, connector and waterproof set of union piece, be equipped with RJ45 net twine interface on the connector, waterproof set of union piece is including the public end of lead wire RJ45, first waterproof rubber ring and lock sleeve, the one end of the public end of lead wire RJ45 is inserted cavity and is held the intracavity and be linked together with the connector, the female end insulator of RJ45 panel includes screw thread portion and is fixed in the retainer plate in the screw thread portion, the lock sleeve passes through threaded connection with the female end insulator of RJ45 panel, first marine glue snare is located between retainer plate and the lock sleeve, through the first waterproof rubber ring of rotational locking cover extrusion to the retainer plate of laminating totally.

Therefore, how to facilitate the disassembly and assembly of the network cable is an urgent technical problem to be solved by those skilled in the art.

### SUMMARY

An object of the present disclosure is to provide a communication module to facilitate the disassembly and assembly of a network cable. Another object of the present disclosure is to provide an inverter including the above communication module.

In order to achieve the above objects, a communication module is provided according to the present disclosure. The communication module includes a housing, a network cable port, and a locking member for blocking a wiring opening position at an end of the housing. The network cable port is located at the wiring opening position of the housing. The locking member is provided with a passage for a network cable to pass through. The locking member includes a tightening cap, a clamping grip, and a rubber plug. The rubber plug is sleeved on an outside of the network cable and clamps the network cable. The clamping grip is sleeved on an outside of the rubber plug and is configured to compress the rubber plug to lock the network cable. The tightening cap is sleeved on an outside of the clamping grip and is configured to compress clamping jaws of the clamping grip to clamp the rubber plug. The tightening cap is provided with a through hole for the network cable to pass through. The locking member further includes an intermediate connection pipe. One end of the intermediate connection pipe is in threaded connection with the housing outside the wiring opening. The other end of the intermediate connection pipe is in threaded connection with the tightening cap. The intermediate connection pipe is provided with a through hole for the network cable to pass through. The intermediate connection pipe is provided with a slot for clamping the clamping grip.

Optionally, a periphery of the intermediate connection pipe is provided with an antiskid pattern.

Optionally, the clamping grip has a cylindrical structure. One end of the cylindrical structure is provided with the clamping jaws which are evenly distributed, and the clamping jaws shrink inward after being stressed to compress the rubber plug and the network cable.

Optionally, the rubber plug is provided with a hollow passage in the middle position of the rubber plug. A side wall of the rubber plug is provided with a cut allowing the network cable to pass through.

Optionally, the rubber plug is a rubber part.

Optionally, the locking member is in threaded connection with the housing. A waterproof washer is arranged at a threaded connection position between the locking member and the housing.

An inverter is provided, which includes the communication module according to any one of the above.

In the above technical solutions, the communication module according to the present disclosure includes a housing, a network cable port, and a locking member for blocking a wiring opening position at an end of the housing. The network cable port is located at the wiring opening position at a wiring end of the housing. The locking member is provided with a passage for a network cable to pass through. When the communication module needs to be assembled, the network cable passes through the locking member and is inserted into the network cable port. Then, the locking member is connected to the wiring opening position at the wiring end of the housing.

It can be seen from the above description, in the communication module according to the present disclosure, the network cable port is moved to the end of the housing, so that the network cable port can be clearly seen after the locking member is removed, thereby avoiding blind insertion of the network cable. It is convenient to plug and unplug the network cable.

### BRIEF DESCRIPTION OF THE DRAWINGS

In order to more clearly illustrate technical solutions in embodiments of the present disclosure or in the conventional technology, the drawings to be used in the description of the embodiments or the conventional technology are briefly described below. Apparently, the drawings in the following description show only some embodiments of the present invention.
Figure 1 is a schematic structural diagram of a communication module according to the conventional technology;
Figure 2 is a schematic structural diagram of a communication module according to an embodiment of the present disclosure;
Figure 3 is an exploded view of the communication module shown in Figure 2;
Figure 4 is a structural diagram showing a process of mounting a waterproof washer in the communication module shown in Figure 2;
Figure 5 is a structural diagram showing a process of mounting a rubber plug in the communication module shown in Figure 2;
Figure 6 is a structural diagram showing a process of mounting an intermediate connection pipe in the communication module shown in Figure 2;
Figure 7 is a structural diagram showing a process of mounting a rubber plug to a clamping grip in the communication module shown in Figure 2;
Figure 8 is a structural diagram showing a process of mounting a clamping grip to an intermediate connection pipe in the communication module shown in Figure 2;
Figure 9 is a structural diagram of the communication module shown in Figure 2 after being assembled;
Figure 10 is a schematic structural diagram of a communication module according to another embodiment of the present disclosure;
Figure 11 is a schematic structural diagram of a rubber stopper according to an embodiment of the present disclosure;
Figure 12 is a diagram showing a process of mounting a network cable to a rubber plug according to an embodiment of the present disclosure.

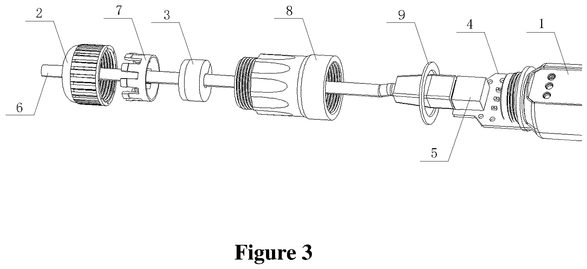

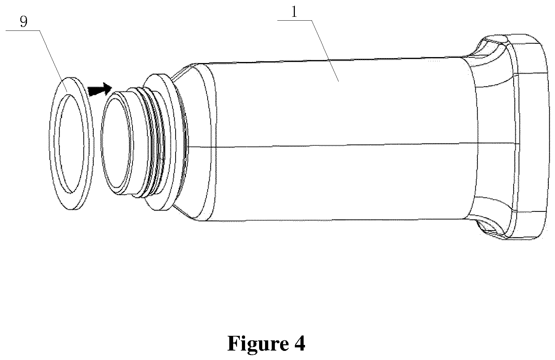

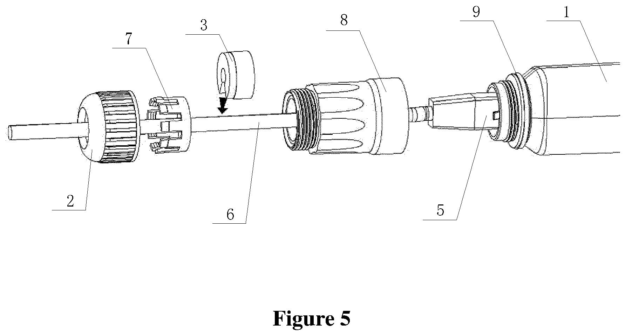

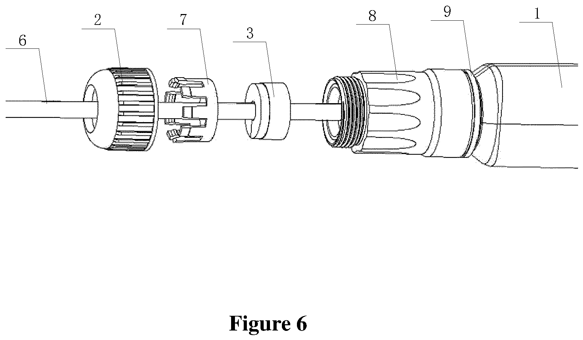

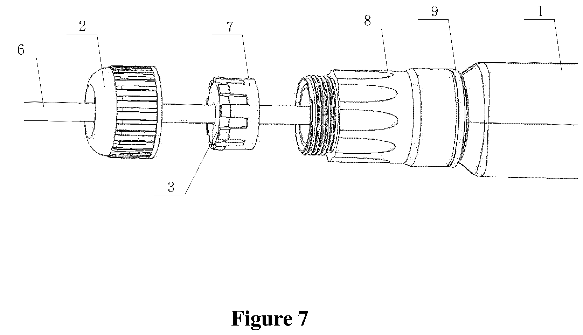

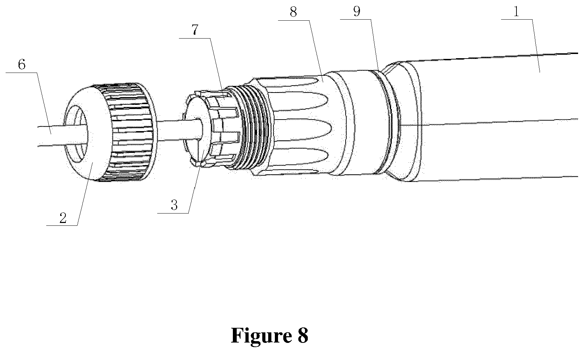

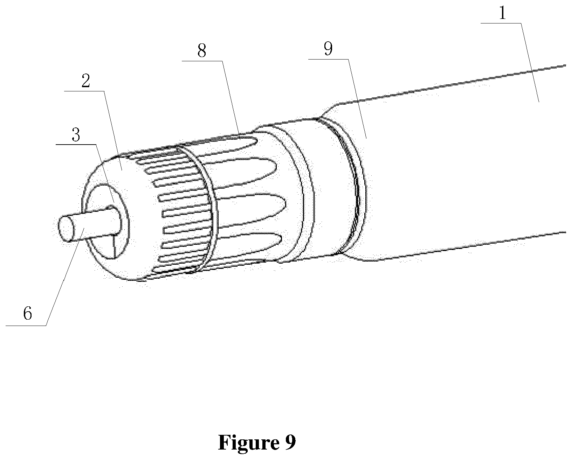

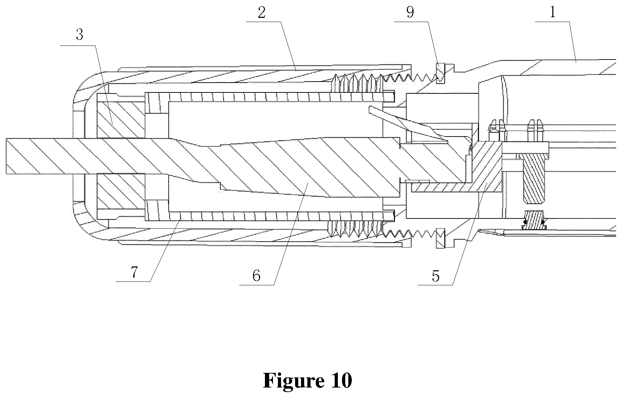

In Figures 1 to 12:

| | | | |
|---|---|---|---|
| 01 | housing, | 02 | tightening cap, |
| 03 | rubber plug, | 04 | PCB board, |
| 05 | network cable port, | 06 | network cable, |
| 1 | housing, | 2 | tightening cap, |
| 3 | rubber plug, | 31 | hollow passage, |
| 32 | cut, | 4 | PCB board, |
| 5 | network cable port, | 6 | network cable, |
| 7 | clamping grip, | 8 | intermediate connection pipe, |
| 9 | waterproof washer. | | |

### DETAILED DESCRIPTION OF EMBODIMENTS

An object of the present disclosure is to provide a communication module to facilitate the disassembly and assembly of a network cable. Another object of the present disclosure is to provide an inverter including the above communication module.

In order to make those skilled in the art better understand technical solutions of the present disclosure, the present disclosure is further described in detail below in conjunction with the accompanying drawings and embodiments.

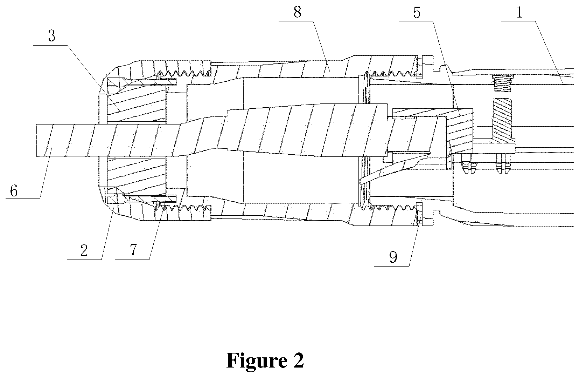

Reference is made to Figure 2 to Figure 12.

In a specific embodiment, a communication module according to the present disclosure includes a printed circuit board (PCB) 4, a housing 1, a network cable port 5, and a locking member for blocking a wiring opening position at an end of the housing 1. The network cable port is located at the wiring opening position of a wiring end of the housing 1. The locking member is provided with a passage for a network cable 6 to pass through. Specifically, the network cable port 5 is fixed on the PCB board 4, and the PCB board 4 is arranged inside the housing 1. Specifically, the locking member may be a fastening structure whose end can clamp the network cable 6 and can be fixedly connected to the housing 1. Specifically, the locking member may also be clamped with the housing 1.

When the communication module needs to be assembled, the network cable 6 passes through the locking member and is inserted into the network cable port 5. Then, the locking member is connected to the wiring opening position at the wiring end of the housing 1.

It can be seen from the above description, in the communication module according to the specific embodiment of the present disclosure, the network cable port 5 is moved to the end of the housing 1, so that a user can operate at a connection position between the network cable 6 and the network cable port 5 after the locking member is removed. The network cable port 5 can be clearly seen after the locking member is removed, thereby avoiding blind insertion of the network cable. It is convenient to plug and unplug the network cable 6.

Specifically, the locking member includes a tightening cap 2, a clamping grip 7, and a rubber plug 3. The rubber plug 3 is sleeved on an outside of the network cable 6 and clamps the network cable 6. The clamping grip 7 is sleeved on an outside of the rubber plug 3 and is configured to compress the rubber plug 3 to lock the network cable 6. The tightening cap 2 is sleeved on an outside of the clamping grip 7 and is configured to compress clamping jaws of the clamping grip 7 to clamp the rubber plug 3. The rubber plug 3 may have a circular ring structure, with the network cable 6 passing along a middle of the circular ring structure. The clamping grip 7 may be a plastic elastic member. When the tightening cap 2 compresses the the clamping grip 7, the clamping jaws of the clamping grip 7 shrink inward to compress the rubber plug 3.

In order to improve tightness, it is preferable that the tightening cap 2 is in threaded connection with the wiring opening position. In an embodiment, the tightening cap 2 is provided with an internal thread, and the wiring opening position is provided with an external thread matching the internal thread.

The locking member further includes an intermediate connection pipe 8. One end of the intermediate connection pipe 8 is fixedly connected to the wiring opening position. The other end of the intermediate connection pipe 8 is in threaded connection with the tightening cap 2. The intermediate connection pipe 8 is provided with a through hole for the network cable 6 to pass through. One end of the intermediate connection pipe 8 is clamped with the wiring opening position. The clamping grip 7 may be taken out from the intermediate connection pipe 8, which facilitates removal of the rubber plug 3 and later maintenance.

In order to facilitate the assembly of the communication module, the intermediate connection pipe 8 is provided with a slot for clamping the clamping grip.

In order to facilitate the disassembly and assembly of the intermediate connection pipe 8, it is preferable that the intermediate connection pipe 8 is in threaded connection with the wiring opening position.

In order to facilitate the assembly of the communication module, it is preferable that the intermediate connection pipe 8 is provided with a slot for clamping the clamping grip 7. It is preferable that the slot is arranged in a circular shape, which is convenient for clamping the clamping grip 7.

In a specific embodiment, the clamping grip 7 has a cylindrical structure. One end of the cylindrical structure is provided with the clamping jaws which are evenly distributed. The clamping jaws shrink inward after being stressed to compress the rubber plug 3 and the network cable 6.

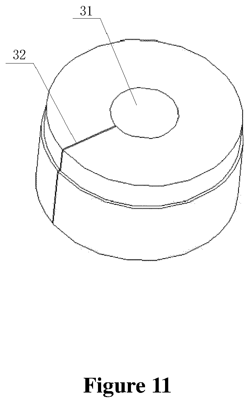

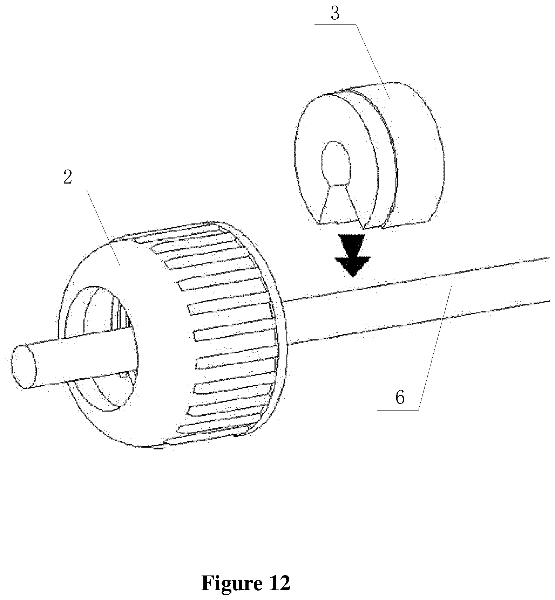

In order to facilitate the assembly and disassembly of the rubber plug 3, as shown in Figures 11 and 12, it is preferable that a middle position of the rubber plug 3 is provided with a hollow passage 31. A side wall of the rubber plug 3 is provided with a cut 32 allowing the network cable 6 to pass through. Specifically, the rubber plug 3 may be a cylindrical rubber-like part. After the rubber plug 3 is deformed, the network cable 6 may be inserted into the hollow passage 31 of the rubber plug 3 from a side of the rubber plug 3.

Specifically, the locking member is in threaded connection with the housing 1. A waterproof washer 9 is arranged at the threaded connection position between the locking member and the housing 1.

When assembling the communication module, the waterproof washer 9 is sleeved on a bottom of a thread of the tightening cap 2. Then, the network cable 6 sequentially passes through an inner hole of the tightening cap 2, an inner hole of the clamping grip 7, the hollow passage 31 of the rubber plug 3, and an inner hole of the intermediate connection pipe 8, and then is inserted into the network cable port 5 inside the housing 1. The intermediate connection pipe 8 is screwed on the housing 1. The rubber plug 3 is inserted into the inner hole of the clamping grip 7. The clamping grip 7 is inserted into the slot of the intermediate connection pipe 8. The tightening cap 2 is screwed on the intermediate connection pipe 8, so that the communication module is assembled.

An inverter is provided according to the present disclosure. The inverter includes the communication module according to any one of the above. The specific structure of the communication module is described above. The inverter including the above communication module also has the above technical effects.

The embodiments in this specification are described in a progressive way, each of which emphasizes the differences from others, and the same or similar parts among the embodiments can be referred to each other.

## Claims

1. A communication module, comprising:
a housing (1);
a network cable port (5); and
a locking member for blocking a wiring opening position at an end of the housing (1);
wherein the network cable port (5) is located at the wiring opening position of the housing (1), and the locking member is provided with a passage for a network cable (6) to pass through;
wherein the locking member comprises: a tightening cap (2), a clamping grip (7), a rubber plug (3) that is sleeved on an outside of the network cable (6) and clamps the network cable (6), and an intermediate connection pipe (8);
the clamping grip (7) is sleeved on an outside of the rubber plug (3) and is configured to compress the rubber plug (3) to lock the network cable (6), the tightening cap (2) is sleeved on an outside of the clamping grip (7) and is configured to compress clamping jaws of the clamping grip (7) to clamp the rubber plug (3), and the tightening cap (2) is provided with a through hole for the network cable (6) to pass through;
one end of the intermediate connection pipe (8) is in threaded connection with the housing (1) outside the wiring opening position, the other end of the intermediate connection pipe (8) is in threaded connection with the tightening cap (2), and the intermediate connection pipe (8) is the through hole for the network cable (6) to pass through; and
the intermediate connection pipe (8) is provided with a slot for clamping the clamping grip (7).

2. The communication module according to claim 1, wherein a periphery of the intermediate connection pipe (8) is provided with an antiskid pattern.

3. The communication module according to claim 1, wherein the clamping grip (7) has a cylindrical structure, and one end of the cylindrical structure is provided with the clamping jaws which are evenly distributed, and the clamping jaws shrink inward after being stressed to compress the rubber plug (3) and the network cable (6).

4. The communication module according to claim 1, wherein the rubber plug (3) is provided with a hollow passage (31) in a middle position of the rubber plug (3), and a side wall of the rubber plug (3) is provided with a cut (32) allowing the network cable (6) to pass through.

5. The communication module according to claim 1, wherein the rubber plug (3) is a rubber part.

6. The communication module according to claim 1, wherein the locking member is in threaded connection with the housing (1), and a waterproof washer (9) is arranged at a threaded connection position between the locking member and the housing (1).

7. An inverter, comprising the communication module according to any one of claims 1 to 6.

## Patentansprüche

1. Kommunikationsmodul, umfassend:
ein Gehäuse (1);
einen Netzwerkkabelanschluss (5); und
ein Verriegelungselement zum Blockieren einer Verdrahtungsöffnungsposition an einem Ende des Gehäuses (1);
wobei sich der Netzwerkkabelanschluss (5) an der Verdrahtungsöffnungsposition des Gehäuses (1) befindet und das Verriegelungselement mit einem Durchgang für ein hindurchlaufendes Netzwerkkabel (6) versehen ist;
wobei das Verriegelungselement Folgendes umfasst: Eine Spannkappe (2), einen Klemmgriff (7), einen Gummistopfen (3), der an einer Außenseite das Netzwerkkabel (6) umhüllt und das Netzwerkkabel (6) festklemmt, und ein Zwischenverbindungsrohrstück (8);
der Klemmgriff (7) umhüllt an einer Außenseite den Gummistopfen (3) und ist konfiguriert, den Gummistopfen (3) zusammenzudrücken, um das Netzwerkkabel (6) festzuklemmen, die Spannkappe (2) umhüllt an einer Außenseite den Klemmgriff (7) und ist konfiguriert, Klemmbacken des Klemmgriffs (7) zusammenzudrücken, um den Gummistopfen (3) festzuklemmen, und die Spannkappe (2) ist mit einem Durchgangsloch versehen, durch das das Netzwerkkabel (6) hindurchlaufen kann;
ein Ende des Zwischenverbindungsrohrstücks (8) steht in Gewindeverbindung mit dem Gehäuse (1) außerhalb der Verdrahtungsöffnungsposition, das andere Ende des Zwischenverbindungsrohrstücks (8) steht in Gewindeverbindung mit der Spannkappe (2) und das Zwischenverbindungsrohrstück (8) ist die Durchgangsöffnung für das Netzwerkkabel (6); und
das Zwischenverbindungsrohrstück (8) ist mit einem Schlitz zum Klemmen des Klemmgriffs (7) versehen.

2. Kommunikationsmodul nach Anspruch 1, wobei ein Umfang des Zwischenverbindungsrohrstücks (8) mit einem rutschfesten Muster versehen ist.

3. Kommunikationsmodul nach Anspruch 1, wobei der Klemmgriff (7) eine zylindrische Struktur aufweist und ein Ende der zylindrischen Struktur mit den Klemmbacken versehen ist, die gleichmäßig verteilt sind, und die Klemmbacken durch das Spannen nach innen gebogen werden, um den Gummistopfen (3) und das Netzwerkkabel (6) zusammenzudrücken.

4. Kommunikationsmodul nach Anspruch 1, wobei der Gummistopfen (3) mit einem hohlen Durchgang (31) in einer mittleren Position des Gummistopfens (3) versehen ist, und eine Seitenwand des Gummistopfens (3) mit einem Einschnitt (32) versehen ist, der es dem Netzwerkkabel (6) ermöglicht, hindurchzugehen.

5. Kommunikationsmodul nach Anspruch 1, wobei der Gummistopfen (3) ein Gummiteil ist.

6. Kommunikationsmodul nach Anspruch 1, wobei das Verriegelungselement in Gewindeverbindung mit dem Gehäuse (1) steht und eine wasserdichte Unterlegscheibe (9) an einer Gewindeverbindungsposition zwischen dem Verriegelungselement und dem Gehäuse (1) angeordnet ist.

7. Wechselrichter, der das Kommunikationsmodul nach einem der Ansprüche 1 bis 6 umfasst.

## Revendications

1. Module de communication comprenant :
un boîtier (1) ;
un port de câble réseau (5) ; et
un élément de verrouillage destiné à bloquer une position d'ouverture de câblage à une extrémité du boîtier (1) ;
dans lequel le port de câble réseau (5) est situé à la position d'ouverture de câblage du boîtier (1), et l'élément de verrouillage est pourvu d'un passage permettant à un câble réseau (6) de passer à travers ;
dans lequel l'élément de verrouillage comprend : un capuchon de serrage (2), une poignée de serrage (7), un bouchon en caoutchouc (3) qui est manchonné à l'extérieur du câble réseau (6) et serre le câble réseau (6), et un tuyau de connexion intermédiaire (8) ;
la poignée de serrage (7) est manchonnée à l'extérieur du bouchon en caoutchouc (3) et est configurée pour comprimer le bouchon en caoutchouc (3) afin de verrouiller le câble réseau (6), le capuchon de serrage (2) est manchonné à l'extérieur de la poignée de serrage (7) et est configuré pour comprimer les mâchoires de serrage de la poignée de serrage (7) afin de serrer le bouchon en caoutchouc (3), et le capuchon de serrage (2) est pourvu d'un trou traversant pour le passage du câble réseau (6) ;
une extrémité du tuyau de connexion intermédiaire (8) est en connexion filetée avec le boîtier (1) en dehors de la position d'ouverture de câblage, l'autre extrémité du tuyau de connexion intermédiaire (8) est en connexion filetée avec le capuchon de serrage (2), et le tuyau de connexion intermédiaire (8) est le trou traversant pour le passage du câble réseau (6) ; et
le tuyau de connexion intermédiaire (8) est pourvu d'une fente pour serrer la poignée de serrage (7).

2. Module de communication selon la revendication 1, dans lequel une périphérie du tuyau de connexion intermédiaire (8) est pourvue d'un motif antidérapant.

3. Module de communication selon la revendication 1, dans lequel la poignée de serrage (7) a une structure cylindrique, et une extrémité de la structure cylindrique est pourvue des mâchoires de serrage qui sont uniformément réparties, et les mâchoires de serrage se rétractent vers l'intérieur après avoir été sollicitées pour comprimer le bouchon en caoutchouc (3) et le câble réseau (6).

4. Module de communication selon la revendication 1, dans lequel le bouchon en caoutchouc (3) est pourvu d'un passage creux (31) dans une position médiane du bouchon en caoutchouc (3), et une paroi latérale du bouchon en caoutchouc (3) est pourvue d'une découpe (32) permettant le passage du câble réseau (6).

5. Module de communication selon la revendication 1, dans lequel le bouchon en caoutchouc (3) est une pièce en caoutchouc.

6. Module de communication selon la revendication 1, dans lequel l'élément de verrouillage est en connexion filetée avec le boîtier (1), et une rondelle étanche à l'eau (9) est agencée à une position de connexion filetée entre l'élément de verrouillage et le boîtier (1).

7. Onduleur comprenant le module de communication selon l'une des revendications 1 à 6.
